Europäisches Patentamt

European Patent Office

Office européen des brevets

(19)

(11) Publication number: **0 058 821**
**B1**

(12) **EUROPEAN PATENT SPECIFICATION**

(45) Date of publication of patent specification: **26.03.86**

(51) Int. Cl.⁴: **F 25 D 19/00, B 60 H 1/32**

(21) Application number: **82100323.3**

(22) Date of filing: **18.01.82**

(54) **Transport refrigeration machine.**

(30) Priority: **24.02.81 US 238389**
**24.02.81 US 238390**

(43) Date of publication of application:
**01.09.82 Bulletin 82/35**

(45) Publication of the grant of the patent:
**26.03.86 Bulletin 86/13**

(84) Designated Contracting States:
**BE DE FR GB IT NL**

(56) References cited:
**FR-A- 803 295**
**FR-A-1 227 842**
**US-A-2 263 476**
**US-A-2 914 927**
**US-A-3 871 188**
**US-A-4 132 088**
**US-A-4 182 134**

(73) Proprietor: **CARRIER CORPORATION**
**Carrier Tower 6304 Carrier Parkway P.O. Box
4800**
**Syracuse New York 13221 (US)**

(72) Inventor: **Androff, Joel W.**
**1523 Annadel Avenue**
**Rowland Heights California (US)**
Inventor: **Carson, Ernest A.**
**P.O. Box 1785**
**San Pedro California (US)**
Inventor: **Anderson, Gordon K.**
**14632 Pacific Street**
**Tustin California (US)**

(74) Representative: **Baillie, Iain Cameron et al
c/o Ladas & Parry Isartorplatz 5
D-8000 München 2 (DE)**

Courier Press, Leamington Spa, England.

# Description

This invention generally relates to refrigeration machines, and more specifically to transport refrigeration machines for conditioning the interior of truck trailer units.

As is well understood in the art, transport refrigeration machines are often secured to a forward wall of a truck trailer unit to cool the interior thereof. Among other favorable considerations, it is usually desirable to minimize the extent to which the refrigeration machine protrudes into the cargo area of the trailer since such protrusion reduces the effective cargo capacity of the trailer. Minimizing or eliminating this protrusion, however, is complicated by a number of factors. Principally, as a practical matter, the extent to which the refrigeration machine as a whole can extend forward of the trailer is limited, for example, by other equipment on or parts of the truck trailer unit, and by the need to allow room forward of the trailer for the truck cab to pivot toward the trailer as the truck turns.

Second, even with many prior art machines which protrude into the trailer cargo space, many of the machine parts are very closely fitted together, and it is practically impossible to eliminate the protrusion of the machine into the trailer cargo space by simply moving the machine elements closer together. Furthermore, typically, many of the parts of transport refrigeration machines are structurally interrelated, for example many components support adjacent elements. It is difficult, and may be practically impossible to significantly alter the size, shape, strength or position of a part if that part is used to support a different element.

Prior art arrangements have attempted to provide a compact assembly in transport refrigerant machines which do not intrude into cargo space. Examples of such prior are French Patents 803295 and 1227842 and U.S. Patent 4,182,134.

The present invention provides an advantage over these prior art assemblies by addressing the twin problems of loss of cargo space and the need for clearance in maneuvering the truck, etc. by a combination of frame structure which locates structure in the opening to the cargo space, but not in the cargo space, and in mounting each structure to the frame so that the various components can be lighter and located closer together since they are not used to support other structures.

French Patent 803295 discloses a device in which not only is an evaporator located within the cargo space but also there is no suggestion of preventing interference with the pivoting of an articulated cab during turning of the vehicle.

French Patent 1227842 is concerned with a cantilevered unit in which the entire structure is to be supported on a single base rather than having a frame with a base for the heavier members and separate supports for the lighter members.

U.S. Patent 4,182,134 similarly discloses a transport refrigeration device for conditioning the interior of a truck trailer. The device incorporates an evaporator housing which partially extends into the cargo area of the trailer and which utilizes an essentially planar support frame with major components of the refrigeration device supported thereby through the intermediary of support members extending therefrom in cantilevered fashion. In the machine of the present invention on the contrary the heat exchanger is supported independently of the housing and a blower unit is also supported independently of the housing.

The present invention provides a transport refrigeration machine which may be used to condition the interior of a trailer without protruding into the interior cargo space thereof and which does not impede operation of the vehicle.

According to the present invention there is provided a transport refrigeration machine for conditioning the interior of a trailer comprising a box frame having front and rear faces and defining internal upper and lower portions for accommodating components of the machine and connecting said machine to the trailer, a refrigerant compressor supported by the frame, a condenser assembly supported by the frame and located in an upper front portion of the refrigeration machine, an evaporator assembly located in an upper rear portion of the refrigeration machine and including a housing secured to and supported by the frame, an evaporator heat exchanger extending within the housing for conducting a refrigerant fluid therethrough, a blower unit extending within the housing and including an evaporator fan to circulate air through the housing in heat transfer relation with refrigerant conducted through the evaporator heat exchanger, a fan shaft rotatably supported by the frame for driving the evaporator fan and power means to drive the compressor and the fan shaft, characterized in that the evaporator assembly further includes heat exchanger support means connecting the evaporator heat exchanger to the frame to support the evaporator heat exchanger independently of the housing, and blower unit support means connecting the blower unit to the frame to support the blower unit independently of the housing.

This invention will now be described by way of example, with reference to the accompanying drawings in which:

Figure 1 is a front perspective view of a transport refrigeration machine incorporating teachings of the present invention;

Figure 2 is a front outline view of the refrigeration machine, with the cover and other parts of the machine omitted for clarity;

Figure 3 is a front perspective of the frame of the refrigeration machine;

Figures 4, 5 and 6 are front, top and side views respectively illustrating the frame shown in Figure 3;

Figure 7 is a side view, partly in cross section, showing portions of the condenser assembly, the evaporator assembly, and the frame of the refrigeration machine, with the cross sectional portions of the view taken along line VII—VII of Figure 2;

Figure 8 is a horizontal cross sectional view of the evaporator assembly, taken along line VIII—VIII of Figure 7;

Figure 9 is a rear view showing the evaporator assembly of the refrigeration machine in greater detail; and

Figures 10 and 11 are front and side views respectively of the evaporator housing of the evaporator assembly.

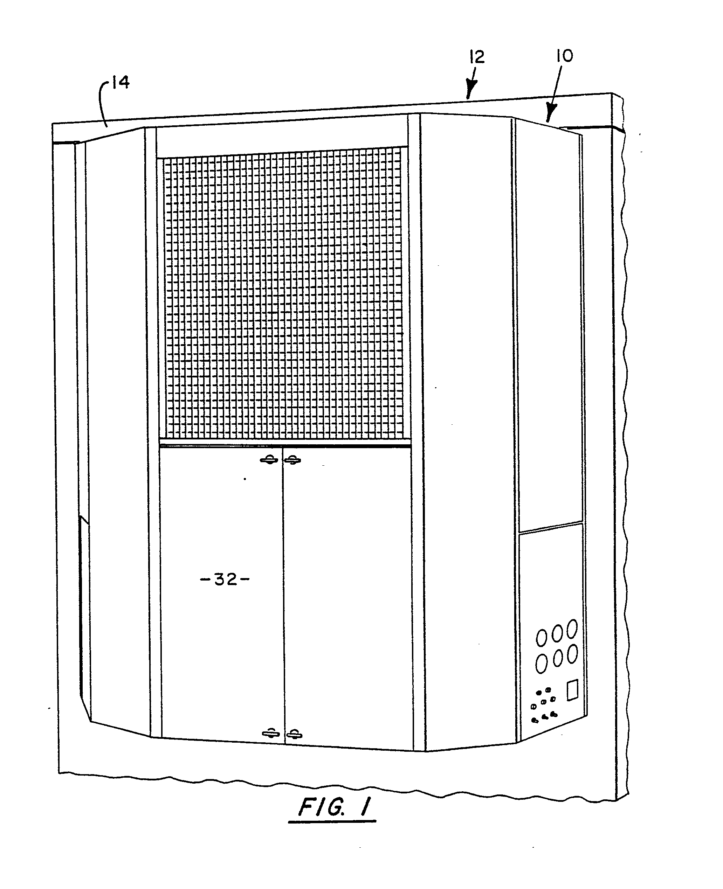

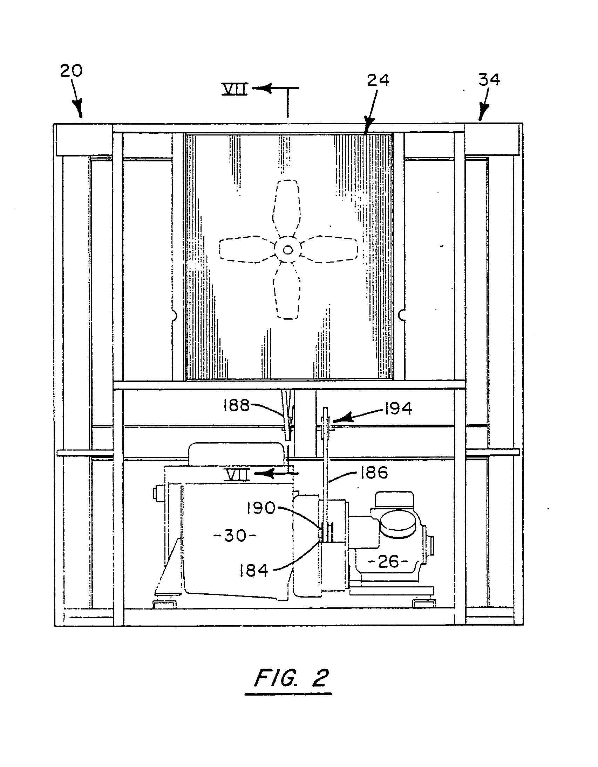

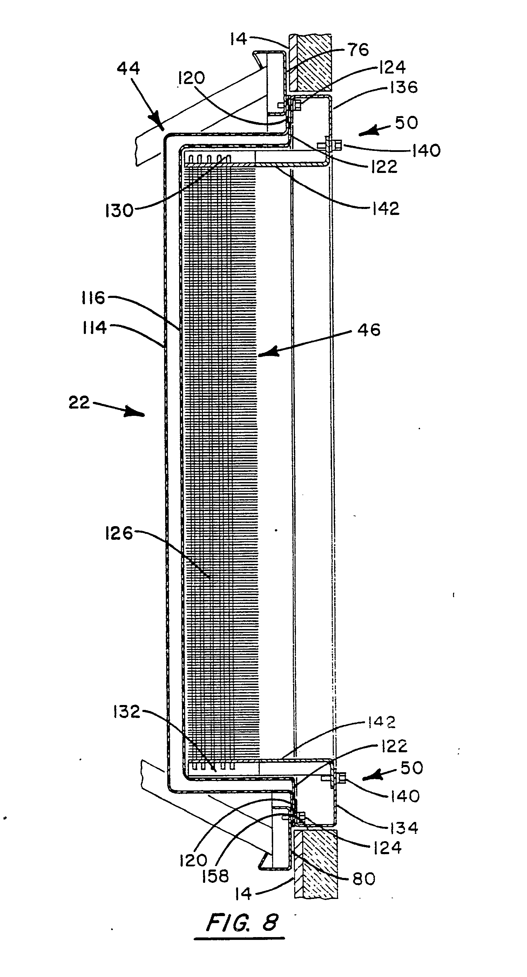

The various figures in the drawings illustrate transport refrigeration machine 10 incorporating teachings of the present invention. Also shown in the drawings are portions of the truck trailer unit 12, specifically portions of front wall 14 thereof. Particularly referring first to Figures 1, 2, 7 and 8, machine 10 generally comprises frame 20, evaporator assembly 22, condenser assembly 24, compressor 26, power means such as engine 30, and cover 32.

More specifically, frame 20 includes box sub-frame 34, condenser assembly support sub-frame 36, evaporator assembly support sub-frame 40, and fan shaft support sub-frame 42. Evaporator assembly 22 includes housing 44, heat exchanger 46, and heat exchanger support means 50. Evaporator assembly 22 further includes a blower unit 52 which incorporates an evaporator fan 54. Support means 56 support the blower unit in position. Condenser assembly 24 generally includes heat exchanger 60 and condenser fan 62. It should be noted that fans 54 and 62 are secured to and driven by common fan shaft 64.

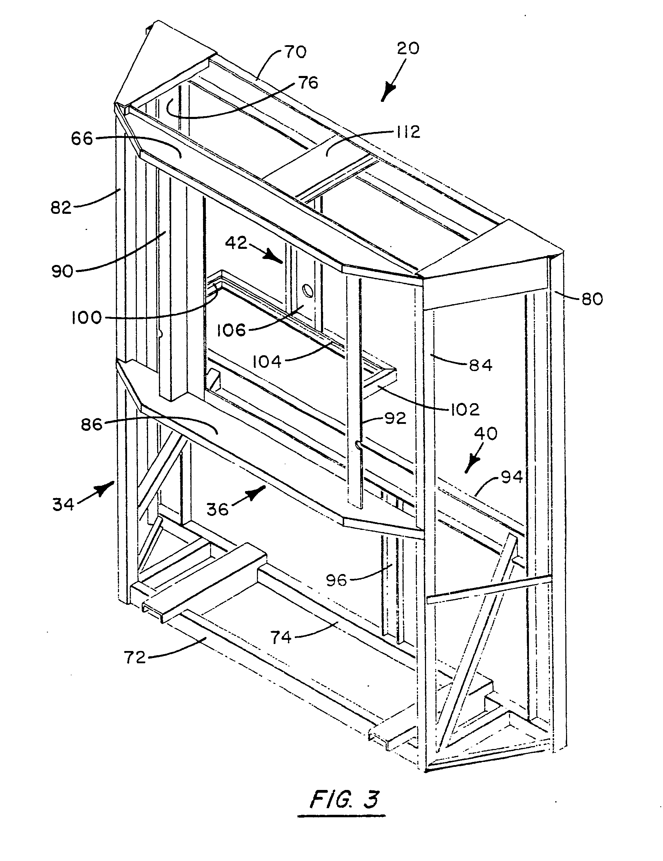

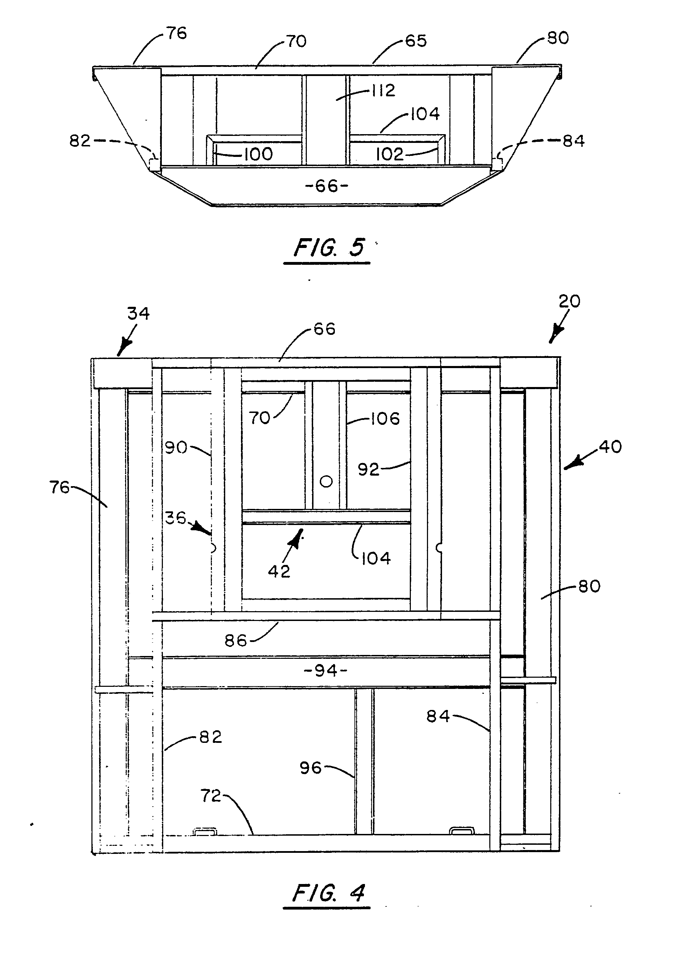

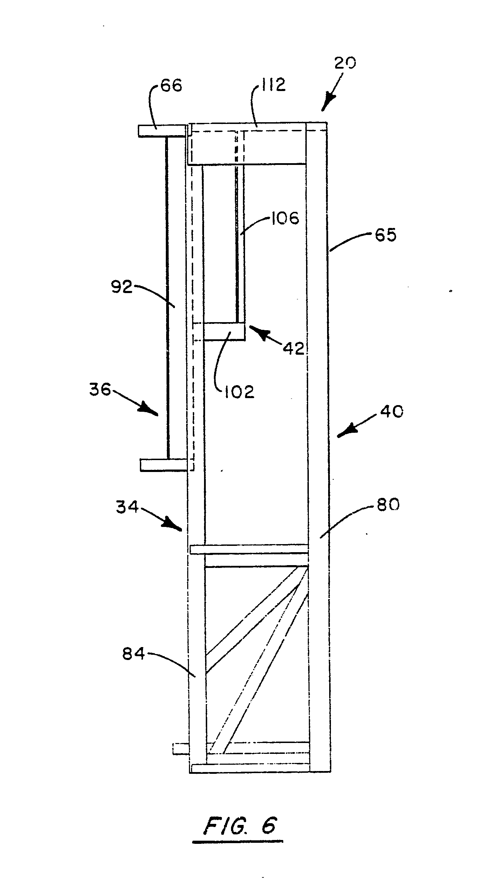

Discussing frame 20 in even greater detail, the frame supports refrigeration machine 10 and is adapted for securing the machine to trailer 12, specifically front wall 14 thereof. Also, frame 20 defines a vertical, back plane 65 which, when the frame is connected to front wall 14 of trailer 12, extends adjacent and substantially parallel to the front wall of the trailer. Particularly referring now to Figures 3 through 6, box sub-frame 34 includes, inter alia, horizontally extending top front beam 66, top back beam 70, front base beam 72, and back base beam 74. Box sub-frame 34 further comprises vertically extending outside beams 76 and 80, and outside posts 82 and 84. The various elements comprising box sub-frame 34 are rigidly secured together, forming a strong outline for refrigeration machine 10.

Condenser assembly support sub-frame 36 includes the top front beam 66, lower beam 86, and side beams 90 and 92. Lower beam 86 is secured to and horizontally extends between intermediate portions of opposed sides of box sub-frame 34, specifically posts 82 and 84 thereof, and side beams 90 and 92 are secured to and extend between upper and lower beams 66 and 86. Evaporator assembly support sub-frame 40 includes top back beam 70, outside beams 76 and 80, and lower back beam 94. Lower back beam 94 is secured to and extends between intermediate portions of outside beams 76 and 80. Brace 96 may be located between back base beam 74 and beam 94 to help support the latter beam.

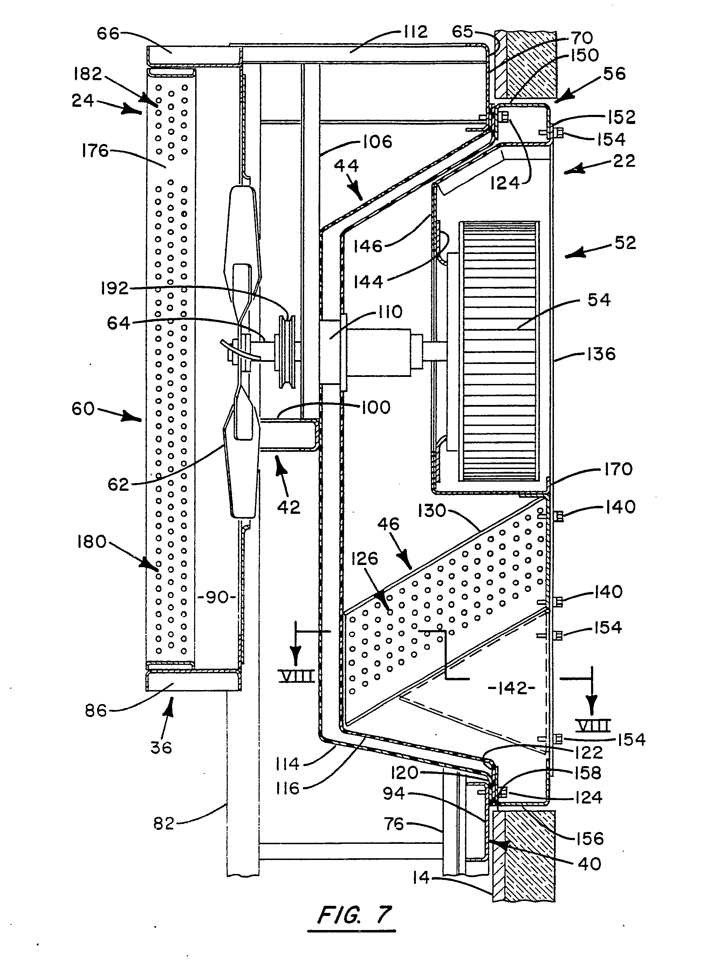

Fan shaft support sub-frame 42 is secured to condenser assembly support sub-frame 36, projects rearward therefrom, and rotatably supports fan shaft 64 rearward of condenser assembly 24 and forward of evaporator assembly 22. With the preferred embodiment shown in the drawings, fan shaft support sub-frame 42 comprises first and second spaced arms 100 and 102, shoulder 104, shaft support member 106, bearing 110 (shown in Figure 7), and reinforcing member 112. Arms 100 and 102 are secured to and rearwardly extend from condenser assembly support sub-frame 36, preferably side beams 90 and 92 thereof, and shoulder 104 is secured to and extends between arms 100 and 102. A lower end of shaft support member 106 is secured to shoulder 104, and the shaft support member projects upward therefrom, between evaporator assembly 22 and condenser assembly 24. Bearing 110 is rigidly secured to shaft support member 106 and, in a conventional manner, rotatably supports fan shaft 64, which extends through the bearing and through the shaft support member.

Reinforcing member 112 is secured to an upper end of shaft support member 106, extends forward therefrom, and has a front end secured to condenser assembly support sub-frame 36, specifically top beam 66 thereof, thus bracing the shaft support member within frame 20. In addition, reinforcing member 112 may also extend rearward from shaft support member 106 and a back end of the reinforcing member is secured to top back beam 70 of evaporator assembly support sub-frame 40 to further brace the shaft support member.

Particularly referring now to evaporator assembly 22, as is believed best illustrated in Figures 7 through 9, the evaporator assembly is located in the upper rear portion of refrigeration machine 10 and is supported by frame 20, specifically evaporator assembly support sub-frame 40. Evaporator housing 44 is secured to and supported by frame 20, and the housing includes outside and inside nested shells 114 and 116 which, for reasons discussed below, are preferably formed from a plastic such as fiberglass. Shells 114 and 116 respectively include peripheral flanges 120 and 122, flange 120 is disposed rearward of and adjacent to beams 70, 76, 80 and 94, and flange 122 is disposed rearward of and adjacent to flange 120. Flanges 120 and 122 are secured to beams 70, 76, 80 and 94 in any suitable manner such as by bolts 124, thus securing housing 44 to frame 20. It should be noted that the main body of evaporator housing 44, that is, the portion of the housing forward of flanges 120 and 122, is completely forward of back plane 65 defined by frame 20. Further, front and side surfaces of shells 114 and 116 are slightly spaced apart, and this space is filled with thermally insulating material (not shown) to facilitate maintaining a temperature differential across housing 44.

Evaporator heat exchanger 46 extends within housing 44 and is provided for conducting a refrigerant fluid therethrough. Heat exchanger 46 includes refrigerant coil 126 and end plates 130 and 132, with coil 126 supported by and transversely extending between these end plates. Preferably, heat exchanger 46 is of the conventional fin-tube type, and a plurality of heat transfer fins extend across coil 126 generally parallel to end plates 130 and 132; but heat exchanger 46 has a rhomboidal shape, sloping upward and rearward within evaporator assembly 22.

Heat exchanger support means 50 connects heat exchanger 46 to frame 20 to support the heat exchanger independently of housing 44. Heat exchanger support means 50 includes first and second side channel members 134 and 136 and securing means 140. Channel members 134 and 136 are secured to frame 20, specifically outside beams 76 and 80, and the channel members project rearward of housing 44. Securing means 140, which may be any suitable type such as bolts, are utilized to secure heat exchanger 46, specifically end plates 130 and 132 thereof, to channel members 134 and 136.

Preferably, channel members 134 and 136 have a generally U-shaped transverse cross section, and inside surfaces of the channel members are disposed rearward of and secured to outside beams 76 and 80 bia bolts 124. Intermediate surfaces of channel members 134 and 136 extend rearwardly from the inside surfaces thereof; and outside surfaces of the channel members perpendicularly extend from the intermediate surfaces thereof, toward the rear, vertical centerline of evaporator assembly 22. Bolts 140 extend through the outside surfaces of channel members 134 and 136, into end plates 130 and 132, securely connecting heat exchanger 46 to the channel members. It should be noted that, even though evaporator housing flanges 120 and 122 are located between beams 76 and 80 and side channel members 134 and 136, and even though bolts 124, which secure the side channel members to beams 76 and 80, also secure flanges 120 and 122 to these side beams, housing flanges 120 and 122 are not needed to support the side channel members and evaporator heat exchanger 46.

As illustrated in the drawings, heat exchanger support means 50 further includes buttress members 142. Buttress members 142 are secured to and project forward from side channel members 134 and 136, and the buttress members extend directly below and in contact with end plates 130 and 132 to further support heat exchanger 46 within evaporator assembly 22. End plates 130 and 132 may be secured to buttress members 142, for example by bolts.

Blower unit 52 also extends within housing 44 and is provided for circulating air therethrough in heat transfer relation with the refrigerant conducted through heat exchanger 46. Blower unit 52 includes evaporator fan 54, fan inlet guide 144, and blower housing 146.

Blower housing 146 supports fan inlet guide 144 and generally guides the air flow through evaporator assembly 22, and the fan inlet guide directly conducts the air flow to fan 54. The front surface of blower housing 146 defines a blower inlet to place the interior of the blower housing and fan inlet guide 144 in direct communication with the space immediately forward of the blower housing.

Blower unit support means 56 connects blower unit 52 to frame 20 to support the blower unit independently of evaporator housing 44, and the blower unit support means includes top channel member 150, upper flange 152, and securing means 154. Channel member 150 is secured to frame 20, specifically beam, 70, and the channel member projects rearward of evaporator housing 44. Upper flange 152, which preferably is an integral part of blower housing 146, is disposed rearward of and contiguous to top channel member 150. Securing means 154, which may be of any conventional type such as bolts, are employed to secure flange 152 to channel member 150.

Preferably, top channel member 150, similar to side channel members 134 and 136, has a generally U-shaped transverse cross section, with an inside surface disposed rearward of and secured to beam 70 and an intermediate surface extending rearward from the inside surface of the top channel member. An outside surface of channel member 150 perpendicularly extends downward from the intermediate surface thereof, and bolts 154 extend through blower unit flange 152 and into the outside surface of channel member 150, securely connecting blower unit 52 to the top. channel member. Hereto it should be pointed out that, even though evaporator housing flanges 120 and 122 are located between beam 70 and top channel member 150, and even though the same bolts which secure the top channel member to beam 70 also secure the evaporator housing flanges thereto, housing flanges 120 and 122 are not necessary to support the top channel member and blower unit 52.

Preferably, evaporator assembly 22 includes a fourth, bottom channel member 156 secured to beam 94, extending rearward generally therefrom, and having a shape similar to the other channel members 134, 136 and 150. When refrigeration machine 10 is secured to front wall 14 of truck trailer 12, the four channel members 134, 136, 150, and 156 project into opening 158 defined by and extending through the front wall of the trailer, and the channel members themselves define a central opening to bring the interior of evaporator assembly 22 into communication with the interior of the trailer. It should be pointed out the insides of the walls of truck trailer 12, as is conventional with truck trailer units employing refrigeration machines, include insulating material; and channel members 134, 136, 150 and 156, which define the rearmost projection of refrigeration machine 10, do not project rearward of the insulating material forming the inside portion of front wall 14. Thus evaporator assembly 22 and the entire refrigeration machine 10 of this invention are located completely forward and external of the interior cargo space of trailer 12, maximizing the available cargo space therein.

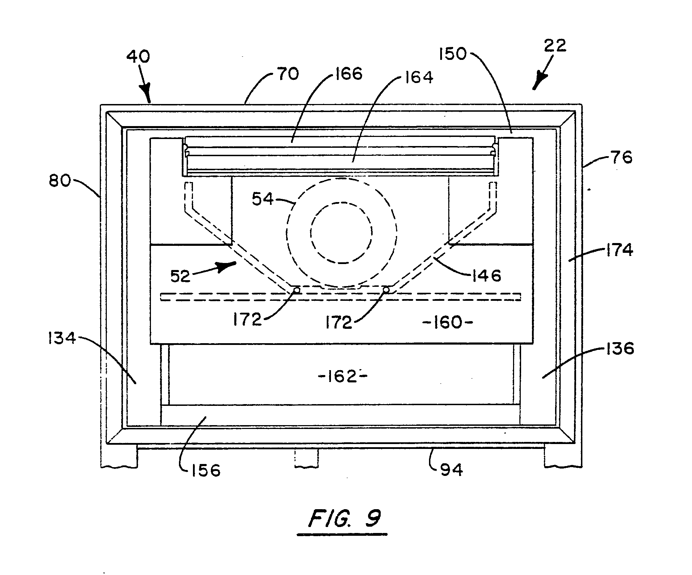

Cover plates 160 (shown only in Figure 9), preferably comprising a plurality of separable plates, are secured to and extend across side channel members 134 and 136, covering much of the space between all four channel members 134, 136, 150 and 156. Cover plates 160, side channel members 134 and 136, and bottom channel member 156 define inlet opening 162, however, to allow air to flow into evaporator assembly 22; and the cover plates and top channel member 156 define discharge opening 164 to allow air to exit the evaporator assembly. Inlet opening 162 may be covered by a protective grill (not shown), and discharge opening 164 may be provided with louvers 166 which, as is understood by those skilled in the art, may be closed to facilitate defrosting evaporator coil 126. In addition, blower housing 146 may be provided with lower flange 170 located contiguous to cover plates 160 and secured thereto by means such as bolts 172, thus further supporting blower unit 52 within evaporator assembly 22. Moreoever, sealing gasket 174 may be disposed between frame 20 and front wall 14 of trailer 12, circumscribing evaporator assembly 22 and truck opening 158, to seal the interface between the frame and the trailer front wall.

Turning now to the other major components of refrigeration machine 10, condenser assembly 24 is located in the upper front portion of refrigeration machine 10 and is supported by frame 20, particularly condenser assembly support subframe 36. Condenser assembly heat exchanger 60 comprises spaced, parallel end plates 176 (only one is shown in the drawings), condenser coil 180, and radiator coil 182. End plates 176 are located inside beams 90 and 92 and are secured to and extend between beams 66 and 86. Coils 180 and 182, in turn, are secured to and transversely extend between end plates 176. Thus, in assembly, upper beam 66 horizontally extends above condenser assembly 24, lower beam 86 horizontally extends below the condenser assembly, and side beams 90 and 92 vertically extend outside the condenser assembly between beams 66 and 86. As will be understood, separate fluids are conducted through coils 180 and 182, with coil 180 acting as a refrigerant condenser and coil 182 functioning as a radiator for engine 30. Further, preferably condenser assembly heat exchanger 60 is of the conventional fin-tube type, with a plurality of heat transfer fins extending across coils 180 and 182 generally parallel to end plates 176.

Compressor 26 is located in the bottom portion of refrigeration machine 10 and is supported via base beams 72 and 74 of box sub-frame 34. As will be understood by those skilled in the art, compressor 26, evaporator coil 126, condenser coil 180, and a suitable expansion device (not shown) are connected together to form a closed loop vapor compression refrigeration circuit. This expansion device may be located in any suitable position, and commonly, for example, the expansion device is located within evaporator assembly 22 adjacent heat exchange coil 126.

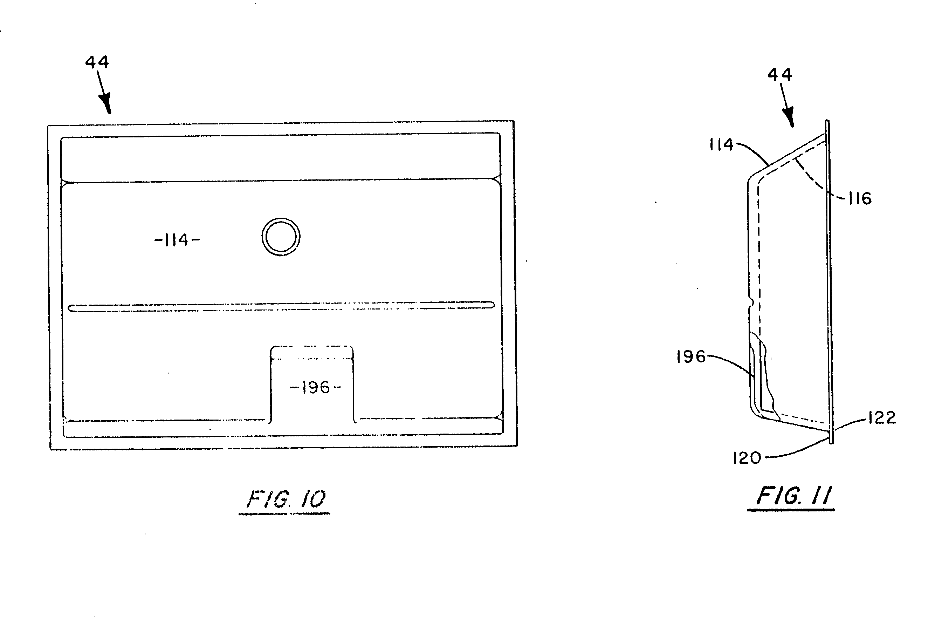

Engine 30 also is located in the bottom portion of refrigeration machine 10 and is supported via base beams 72 and 74 of box sub-frame 34. Engine 30 is provided for driving compressor 26 and the engine is drivingly connected thereto by shaft 184. Engine 30 is also provided for driving fans 54 and 62 via fan shaft 64; and the engine is conventionally connected to the fan shaft by means of shaft 184, belts 186 and 188, pulleys 190 and 192, and intermediate pulley-shaft assembly 194. As will be apparent, evaporator housing 44, condenser assembly 24, fan shaft 64, fan shaft support sub-frame 42, belt 188, and intermediate shaft-pulley assembly 194 all fit relatively closely together within machine 10; and, as shown in Figures 10 and 11, the forward surface of outside shell 114 of the evaporator housing defines recess 196 to insure an adequate clearance between the evaporator housing and the intermediate pulley-shaft assembly.

Because evaporator housing 44 has this unique, irregular shape and to avoid the relatively large capital costs associated with a metal stamping process, preferably evaporator housing shells 114 and 116 are formed by a plastic molding process. Forming shells 114 and 116 from a plastic material instead of a metal also improves the desired thermal separation of the interior of housing 44 and of the entire evaporator assembly 22 from the other components of refrigeration machine 10. For example, since evaporator housing 44 is formed from a plastic, the housing itself is thermally insulated from frame 20 even though portions of the housing are in direct contact with the frame. In addition, with housing flanges 120 and 122 located between frame 20 and channel members 134, 136, 150 and 156, the flanges thermally insulate the channel members and, thus, heat exchanger support means 50 and blower unit support means 56 from the frame, substantially completely thermally isolating evaporator assembly 22 from frame 20.

Finally, cover 32, omitted in all views except Figure 1, is secured to frame 20 to protect the interior elements of machine 10. Cover 32 may be removed relatively easy to provide access to the inside of refrigeration machine 10, and preferably the cover is provided with individual doors to allow access to various inside elements of machine 10 without requiring removal of the entire cover.

Thus, as may be appreciated from a view of the above discussion, transport refrigeration machine 10 of the present invention is a relatively simple yet very compact machine. More particularly, when machine 10 is mounted on front wall 14 of trailer 12, the main body of evaporator housing 44 is completely forward of the trailer front wall; and, even though evaporator assembly 22 as a whole projects rearward of frame 20, the evaporator assembly extends rearward from the frame less than the front to rear depth of opening 158, maintaining the evaporator assembly and the entire refrigeration machine 10, forward of the trailer interior. Moreover, because evaporator heat exchanger 46 and blower unit 52 are supported by frame 20 independent of evaporator housing 44, the housing may be formed from a lightweight plastic material. This, first, assists thermally insulating the interior of housing 44 from the rest of machine 10, and second, facilitates forming various recesses and indentations in the housing. With these recesses and indentations, evaporator housing 44 and the entire evaporator assembly 22 may be very compactly fitted within machine 10, completely forward of the interior of trailer 12.

## Claims

1. A transport refrigeration machine (10) for conditioning the interior of a trailer (12), comprising a box frame (20) having front and rear faces and defining internal upper and lower portions for accommodating components of the machine (10) and connecting said machine (10) to the trailer (12), a refrigerant compressor (26) supported by the frame (20), a condenser assembly (24) supported by the frame (20) and located in an upper front portion of the refrigeration machine (10), an evaporator assembly (22) located in an upper rear portion of the refrigeration machine (10), and including a housing (44) secured to and supported by the frame (20), an evaporator heat exchanger (46) extending within the housing (44) for conducting a refrigerant fluid therethrough, a blower unit (52) extending within the housing (44) and including an evaporator fan (54) to circulate air through the housing (44) in heat transfer relation with refrigerant conducted through the evaporator heat exchanger (46), a fan shaft (64) rotatably supported by the frame (20) for driving the evaporator fan (54), and power means (30) to drive the compressor (26) and the fan shaft (64), characterized in that the evaporator assembly (22) further includes heat exchanger support means (50) connecting the evaporator heat exchanger (46) to the frame (20) to support the evaporator heat exchanger (46) independently of the housing (44), and blower unit support means (56) connecting the blower unit (52) to the frame (20) to support the blower unit (52) independently of the housing (44).

2. A transport refrigeration machine (10) according to claim 1, characterized in that the evaporator heat exchanger (46) includes first (130) and second (132) end plates, and in that the evaporator heat exchanger support means (50) includes first (134) and second (136) side channel members secured to the frame (20) and projecting rearward of the housing (44), means (140) securing the end plates (130, 132) of the evaporator heat exchanger (46) to the first (134) and second (136) side channel members, and buttress members (142) secured to and projecting forward from the side channel members (134, 136), and extending directly below and in contact with the end plates (130, 132) to further support the evaporator heat exchanger (46).

3. A transport refrigeration machine (10) according to claim 1 characterized in that the frame (20) includes an evaporator assembly support sub-frame (40) to support the evaporator assembly (22), and in that the housing (44) includes an outside shell (114) including a first peripheral flange (120) located rearward of the evaporator assembly support sub-frame (40) and secured thereto, and an inside shell (116) spaced from the outside shell (114), and including a second peripheral flange (122) located rearward of the first peripheral flange (120) and secured to the evaporator assembly support sub-frame (40).

4. A transport refrigeration machine according to claim 1, characterized in that the blower unit support means (56) includes a top channel member (150) secured to the frame (20) and projecting rearward of the housing (44), and an upper flange (152) of the blower unit (52) disposed rearward of the top channel member (150), and means (154) securing the upper flange (152) to the top channel member (150).

5. A transport refrigeration machine according to claim 4, characterized in that the blower unit support means (56) further includes first (134) and second (136) side channel members secured to the frame (20) and projecting rearward of the housing (44), cover plate means (160) secured to and extending between the first (134) and second (136) side channel members, a lower flange (170) of the blower unit (52) disposed contiguous to the cover plate means (160), and means (172) securing the lower flange (170) to the cover plate means (160).

6. A transport refrigeration machine (10) according to claim 1, characterized in that the housing (44) for the evaporator assembly includes a main body accommodating within the frame (20) so as not to project beyond the rear face (25) of said frame which is attachable to the trailer (12).

7. A transport refrigeration machine according to claim 1, characterized in that a condenser assembly support sub-frame (36) is supported by a box sub-frame (34) of said frame (20), an evaporator assembly support sub-frame (40) is supported by the box sub-frame (34), and a shaft support sub-frame (42) is secured to the condenser assembly support sub-frame (36).

8. A transport refrigeration machine (10) according to claim 7, characterized in that the shaft support sub-frame (42) includes first and second, spaced arms (100, 102) secured to and rearwardly extending from the condenser assembly sub-frame (36), a shoulder (104) secured to and extending between the first and second arms (100, 102), a shaft support member (106) having a lower end secured to the shoulder (104) projecting upward therefrom between the evaporator and condenser assemblies (22, 24), and rotatably supporting the shaft means (64), and a reinforcing member (112) secured to an upper end of the shaft support member (106), extending forward therefrom, and having a front end secured to the condenser assembly support sub-frame (36) to brace the shaft support member (106).

9. A transport refrigeration machine (10) according to claim 8, characterized in that the condenser assembly support sub-frame (36) includes a lower beam (86) extending laterally below the condenser assembly (24), an upper beam (66) extending laterally above the condenser assembly (24), and first and second side beams (90, 92) located outside the condenser assembly (24), and secured to and extending between the lower and upper beams (86, 66), and in that the first and second arms (100, 102) are secured to and rearwardly extend from the side beams (90, 92) and the front end of the reinforcing member (112) is secured to the upper beam (66).

10. A transport refrigeration machine according to claim 8 or claim 9 characterized in that the reinforcing member (112) also extends rearward from the shaft support member (106), and in that a back end of the reinforcing member (112) is secured to the evaporator assembly support sub-frame (40) to further brace the shaft support member (106).

**Revendications**

1. Machine frigorifique de transport (10) destinée à conditionner le volume intérieur d'une remorque (12), comprenant un bâti (20) en forme de caisses possédant des faces avant et arrière et délimitant des parties intérieures supérieure et inférieure destinées à loger les organes de la machine et à assembler cette machine (10) à la remorque (12), un compresseur de réfrigérant (26) supporté par le bâti (20), un ensemble condenseur (24) supporté par le bâti (20) et placé dans une partie supérieure avant de la machine frigorifique (10), un ensemble évaporateur (22) placé dans une partie supérieure arrière de la machine frigorifique (10) et comprenant un carter (44) fixé au bâti (20) et supporté par ce bâti, un échangeur de chaleur d'évaporateur (46) qui s'étend dans le carter (44) pour faire circuler un fluide réfrigérant dans ce carter (44), une unité soufflerie (52) qui s'étend dans le carter (44) et comprend un ventilateur d'évaporateur (54) servant à faire circuler de l'air dans le carter (44) dans une position relative de transmission de la chaleur par rapport au réfrigérant qu'on fait circuler à travers l'échangeur de chaleur d'évaporateur (46), un arbre de ventilateur (64) porté libre en rotation par le bâti (20), pour entraîner le ventilateur (54) de l'évaporateur, et des moyens moteurs (20) servant à entraîner le compresseur (26) et l'arbre (64) du ventilateur, caractérisée en ce que l'ensemble évaporateur (22) comprend des moyens supports d'échangeur de chaleur (50) qui relient l'échangeur de chaleur d'évaporateur (46) au bâti (20) pour supporter l'échangeur de chaleur d'évaporateur (46) indépendamment du carter (44), et des moyens supports de l'unité soufflerie (56) qui relient l'unité soufflerie (52) au bâti (20) pour supporter l'unité soufflerie (52) indépendamment du carter (44).

2. Machine frigorifique de transport (10) selon la revendication 1, caractérisée en ce que l'échangeur de chaleur (46) de l'évaporateur comprend un premier (130) et un deuxième (132) flasques d'extrémités, et en ce que les moyens supports (50) de l'échangeur de chaleur de l'évaporateur comprennent un premier (134) et un deuxième (136) profilés en U latéraux fixés au bâti (20) et qui font saillie en arrière du carter (44), des moyens (140) servant à fixer les flasques d'extrémités (130, 132) de l'échangeur de chaleur (46) de l'évaporateur au premier (134) et au deuxième (136) profilés en U latéraux, et des renforts (142) fixés aux profilés en U latéraux (134, 136) et qui font saillie sur ces profilés, et s'étendent directement au-dessous des flasques d'extrémités (130, 132) et en contact avec ces flasques pour constituer un support supplémentaire pour l'échangeur de chaleur (46) de l'évaporateur.

3. Machine frigorifique de transport (10) selon la revendication 1, caractérisée en ce que le bâti (20) comprend un bâti partiel (40) support d'ensemble évaporateur, destiné à supporter l'ensemble évaporateur (22) et en ce que le carter (44) comprend une coquille extérieure (114) comprenant un premier rebord périphérique (120) placé en arrière du bâti partiel (40) support d'ensemble évaporateur et fixé à ce bâti, et une coquille intérieure (116) espacée de la coquille extérieur (114) et comprenant un deuxième rebord périphérique (122) placé en arrière du premier rebord périphérique (120) et fixé au bâti partiel (40) support d'ensemble évaporateur.

4. Machine frigorifique de transport selon la revendication 1, caractérisée en ce que les moyens supports (56) de l'unité soufflerie comprennent un profilé supérieur en U (150) fixé au bâti (20) et qui fait saillie en arrière du carter (44), et un rebord supérieur (152) de l'unité soufflerie (52) disposé en arrière du profilé en U supérieur (150), et des moyens (154) qui fixent le rebord supérieur (152) au profilé en U supérieur (150).

5. Machine frigorifique de transport selon la revendication 4, caractérisée en ce que les moyens supports (56) de l'unité soufflerie comprennent en outre un premier (134) et un deuxième (136) profilés en U latéraux fixés au bâti (20) et qui font saillie en arrière du carter (44), des moyens formant plaques de recouvrement (160) fixés aux premier (134) et deuxième (136) profilés en U latéraux, un rebord inférieur (170) de l'unité soufflerie (52) disposé adjacent aux moyens formant plaques de recouvrement (160), et des moyens (172) qui fixent le rebord inférieur (170) aux moyens formant plaques de recouvrement (160).

6. Machine frigorifique de transport (10) selon la revendication 1, caractérisée en ce que le carter (44) de l'ensemble évaporateur comprend un corps principal se logeant à l'intérieur du bâti (20) de manière à ne pas faire saillie au-delà de la face arrière (25) dudit bâti qui peut être fixé à la remorque (12).

7. Machine frigorifique de transport selon la revendication 1, caractérisé en ce qu'un bâti partiel (36) support de l'ensemble condenseur est supporté par un bâti partiel (34) en forme de caisson dudit bâti (20), un bâti partiel (40) support de l'ensemble évaporateur est supporté par le bâti partiel en caisson (34), et un bâti partiel support d'arbre (42) est fixé au bâti partiel support d'ensemble condenseur (36).

8. Machine frigorifique de transport (10) selon la revendication 7, caractérisée en ce que le bâti partiel support d'arbre (42) comprend des premier et deuxième bras espacés (100, 102), fixés au bâti partiel d'ensemble condenseur (36) et qui s'étendent vers l'arrière à partir de ce bâti, un épaulement (104) fixé aux premier et deuxième bras (100, 102) et s'étendant entre ces bras, un élément support d'arbre (106) présentant une extrémité inférieure fixée à l'épaulement (104) et qui fait saillie vers le haut à partir de cet épaulement, entre les ensembles évaporateur et condenseur (22, 24), et qui supportent les moyens d'arbre (64) en rotation, et un élément de renforcement (112) fixé à une extrémité supérieure de l'élément support d'arbre (106) et s'étendant vers l'avant à partir de cet élément, et ayant une extrémité supérieure fixée au bâti partiel support d'ensemble condenseur (36), pour entretoiser l'élément support d'arbre (106).

9. Machine frigorifique de transport (10) selon la revendication 8, caractérisée en ce que le bâti partiel support d'ensemble condenseur (36) comprend une poutre inférieure (86) qui s'étend latéralement au-dessous de l'ensemble condenseur (24), et une poutre supérieure (66) qui s'étend transversalement au-dessus de l'ensemble condenseur (24) et une première et une deuxième poutres latérales (90, 92) placées à l'extérieur de l'ensemble condenseur (24) et fixées aux poutres inférieure et supérieure (86, 66) et s'étendant entre ces poutres, et en ce que le premier et le deuxième bras (100, 102) sont fixés aux poutres latérales (90, 92) et s'étendent vers l'arrière à partir de ces poutres, et en ce que l'extrémité avant de l'élément de renforcement (112) est fixé à la poutre supérieure (66).

10. Machine frigorifique de transport selon la revendication 8 ou 9, caractérisée en ce que l'élément de renforcement (112) s'étend également en arrière à partir de l'élément support d'arbre (106), et en ce qu'une extrémité arrière de l'élément de renforcement (112) est fixée au bâti partiel support d'ensemble évaporateur (40) pour entretoiser davantage l'élément support d'arbre (106).

**Patentansprüche**

1. Transport-Kältemaschine (10) zum Konditionieren des Innenraums eines Anhängers (12), mit einem kastenförmigen Gestell (20), das eine vordere und eine hintere Fläche hat und einen oberen und einen unteren Innenraum begrenzt, die zur Aufnahme von Bauteilen der Maschine (10) und zum Verbinden der Maschine (10) mit dem Anhänger (12) dienen, einen von dem Gestell (20) getragenen Kompressor (26) für das Kältemittel, eine von dem Gestell (20) getragene und im vorderen oberen Teil der Kältemaschine (10) angeordnete Kondensatoranordnung (24), eine im hinteren oberen Teil der Kältemaschine (10) angeordnete Verdampferanordnung (22), die ein an dem Gestell (20) befestigtes und von ihm getragenes Gehäuse (44), ferner einen sich in dem Gehäuse (44) erstreckenden Verdampfer-Wärmeaustauscher (46) zum Hindurchleiten eines fließfähigen Kältemittels und eine in dem Gehäuse (44) angeordnete Gebläseeinheit (52) besitzt, die ein Verdampfergebläse (54) aufweist, das dazu dient, Luft in Wärmetauschbeziehung mit durch den Verdampfer-Wärmeaustauscher geleitetem Kältemittel durch das Gehäuse (44) umzuwählzen, ferner eine in dem Gestell (20) drehbar gelagerten Gebläsewelle (64) zum Antrieb des Verdampfergebläses (54) und einen Antrieb (30) für den Kompressor (26) und die Gebläsewelle (64), dadurch gekennzeichnet, daß die Verdampferanordnung (22) ferner eine Wärmeaustauscher-Trageinrichtung (50) besitzt, die den Verdampfer-Wärmeaustauscher (46) mit dem Gestell (20) verbindet, so daß der Verdampfer-Wärmeaustauscher (46) unabhängig von dem Gehäuse (44) abgestützt ist, und eine Gebläseeinheit-Tragvorrichtung (56), die die Gebläseeinheit (52) mit dem Gestell (20) verbindet, so daß die Gebläseeinheit (52) unabhängig von dem Gehäuse (44) abgestützt ist.

2. Transport-Kältemaschine (10) nach Anspruch 1, dadurch gekennzeichnet, daß der Verdampfer-Wärmeaustauscher (46) eine erste (130) und eine zweite (132) Stirnplatte besitzt, daß die Wärmeaustauscher-Trageinrichtung (50) einen ersten (134) und einen zweiten (136) U-profilförmigen Seitenteil besitzt, die an dem Gestell (20) befestigt sind und von dem Gehäuse (44) nach hinten vorstehen, ferner Mittel (140), die die Stirnplatten (130, 132) des Verdampfer-Wärmeaustauschers (46) mit dem ersten (134) und dem zweiten (136) U-profilförmigen Seitenteil befestigen, und Widerlagermittel (142), die an den U-profilförmigen Seitenteilen (134, 136) befestigt sind, von ihnen nach vorn vorstehen und sich direkt unterhalb der Stirnplatten (130, 132) erstrecken und zum zusätzlichen Abstützen des Verdampfer-Wärmeaustauschers (46) an ihnen angreifen.

3. Transport-Kältemaschine (10) nach Anspruch 1, dadurch gekennzeichnet, daß das Gestell (20) ein die Verdamperanordnung (22) tragendes Teilgestell (40) umfaßt und daß das Gehäuse (44) einen Außenmantel (114) besitzt, das einen ersten Umfangsflansch (120) aufweist, der hinter dem die Verdampferanordnung (22) tragenden Teilgestell (40) angeordnet und an ihm befestigt ist, und einen im Abstand von Außenmantel (114) angeordneten Innenmantel (116), der einen zweiten Umfangsflansch (122) besitzt, der hinter dem ersten Umfangsflansch (120) angeordnet und an dem die Verdampferanordnung tragenden Teilgestell (40) befestigt ist.

4. Transport-Kältemaschine nach Anspruch 1, dadurch gekennzeichnet, daß die Gebläseeinheit-Trageinrichtung (56) einen U-profilförmigen Oberteil (150) umfaßt, der an dem Gestell (20) befestigt ist und sich von dem Gehäuse (44) rückwärts erstreckt, ferner einen oberen hinter dem U-profilförmigen Oberteil (150) angeordneten, oberen Flansch (152) der Gebläseeinheit (52) und Mittel (154) zum Befestigen des oberen Flansches (152) an dem U-profilförmigen Oberteil (150).

5. Transport-Kältemaschine nach Anspruch 4, dadurch gekennzeichnet, daß die Gebläseeinheit-Trageinrichtung (56) ferner einen ersten (134) und einen zweiten (136) U-profilförmigen Seitenteil besitzt, die an dem Gestell (20) befestigt sind und von dem Gehäuse (44) rückwärts vorstehen, sowie Deckplattenmittel (160), die sich zwischen dem ersten (134) und dem zweiten (136) U-profilförmigen Seitenteil erstrecken und an ihnen befestigt sind, einen an den Deckplattenmitteln (160) anliegenden, unteren Flansch (170) der Gebläseeinheit (52), und Mittel (172) zum Befestigen des unteren Flansches (170) an den Deckplattenmitteln (160).

6. Transport-Kältemaschine (10) nach Anspruch 1, dadurch gekennzeichnet, daß das Gehäuse (44) für die Verdamperanordnung einen Körper besitzt, der in dem Gestell (20) derart angeordnet ist, daß er nicht über die an dem Anhänger (12) anbringbare, hintere Fläche (25) des Gestells vorsteht.

7. Transport-Kältemaschine (10) nach Anspruch 1, dadurch gekennzeichnet, daß ein kastenförmiges Teilgestell (34) des Gestells (20) ein die Kondensatoranordnung tragendes Teilgestell (36) und ein die Verdamperanordnung tragendes Teilgestell (40) trägt und an dem die Kondensatoranordnung tragenden Teilgestell (40) ein wellentragendes Teilgestell (42) befestigt ist.

8. Transport-Kältemaschine (10) nach Anspruch 7, dadurch gekennzeichnet, daß das wellentragende Teilgestell (42) einen ersten und einen zweiten Arm (100, 102) besitzt, die im Abstand voneinander angeordnet und an dem die Kondensatoranordnung tragenden Teilgestell (36) befestigt sind und sich von ihr rückwärts erstrecken, ferner eine Schulter (104), die sich zwischen dem ersten und dem zweiten Arm (100, 102) erstreckt und an ihnen befestigt ist, einen Wellenträger (106) der an seinem unteren Ende an der Schulter (104) befestigt ist und sich von dort aufwärts zwischen der Verdampfer- und der Kondensatoranordnung (22, 24) erstreckt und in dem die Wellenmittel (64) drehbar gelagert sind, und ein Verstärkungsglied (112), das am oberen Ende des Wellenträgers (106) befestigt ist und sich von dort vorwärts erstreckt und das an seinem vorderen Ende zum Versteifen des Wellenträgers (106) an dem die Kondensatoranordnung tragenden Teilgestell (36) befestigt ist.

9. Transport-Kältemaschine (10) nach Anspruch 8, dadurch gekennzeichnet, daß das die Kondensatoranordnung tragende Teilgestell (36) einen unteren Träger (86) besitzt, der sich unterhalb der Kondensatoranordnung (24) seitwärts erstreckt, ferner einen oberen Träger (66), der sich oberhalb der Kondensatoranordnung (24) seitwärts erstreckt, und einen ersten und einen zweiten Seitenträger (90, 92), die außerhalb der Kondensatoranordnung (24) angeordnet sind und sich zwischen dem unteren und dem oberen Träger (86, 66) erstrecken und an ihnen befestigt sind, und daß der erste und der zweite Arm (100, 102) an den Seitenträgern (90, 92) befestigt sind und sich von ihnen rückwärts erstrecken, und das vordere Ende des Verstärkungsgliedes (112) an dem oberen Träger (66) befestigt ist.

10. Transport-Kältemaschine nach Anspruch 8 oder 9, dadurch gekennzeichnet, daß das Verstärkungsglied (112) sich von dem Wellenträger (106) auch rückwärts erstreckt und an seinem hinteren Ende zum weiteren Versteifen des Wellenträgers (106) an dem die Verdampferanordnung tragenden Teilgestell (40) befestigt ist.

*FIG. 1*

FIG. 2

FIG. 3

_FIG. 5_

_FIG. 4_

*FIG. 6*

*FIG. 7*

*FIG. 8*

7

FIG. 9

FIG. 10

FIG. 11